# FASCICULE DE BREVET EUROPEEN

(11) **EP 2 533 496 B1**
(45) Date de publication et mention de la délivrance du brevet: **04.09.2019**
(21) Numéro de dépôt: 12171324.2
(22) Date de dépôt: 08.06.2012
(51) Int. Cl.: H04L 29/06, H04M 3/42, H04M 7/00

(54) **PROCEDE DE COMMUNICATION DE VOIX SUR IP, SYSTEME ET SERVEUR ASSOCIES.**
IP-Voicemail-Kommunikationsverfahren, sowie entsprechendes System und dazugehöriger Server.
Method for voice over IP communication, associated system and server

(30) Priorité: 10.06.2011 FR 1155123
(43) Date de publication de la demande: 12.12.2012
(73) Titulaire: Orange, 75015 Paris (FR)
(72) Inventeur: Roger, Olivier, 22560 PLEUMEUR-BODOU (FR)
(74) Mandataire: Cabinet Plasseraud

(56) Documents cités:
- SHEN Y: "Private Extensions to the Session Initiation Protocol (SIP) for Service Interaction Indicator; draft-shen-interaction-ind-08.txt", PRIVATE EXTENSIONS TO THE SESSION INITIATION PROTOCOL (SIP) FOR SERVICE INTERACTION INDICATOR; DRAFT-SHEN-INTERACTION-IND-08.TXT, INTERNET ENGINEERING TASK FORCE, IETF; STANDARDWORKINGDRAFT, INTERNET SOCIETY (ISOC) 4, RUE DES FALAISES CH- 1205 GENEVA, no. 8, 16 janvier 2011 (2011-01-16), pages 1-9, XP015073549,
- KOLBERG ET AL: "Managing feature interactions between distributed SIP call control services", COMPUTER NETWORKS, ELSEVIER SCIENCE PUBLISHERS B.V., AMSTERDAM, NL, vol. 51, no. 2, 10 novembre 2006 (2006-11-10), pages 536-557, XP005758516, ISSN: 1389-1286, DOI: 10.1016/J.COMNET.2006.08.006
- Zohair Chentouf: "New Management Methods for Feature and Preference Interactions", , 1 septembre 2003 (2003-09-01), pages 233-245, XP055017394, Extrait de l'Internet: URL:http://www.springerlink.com/content/t0 4yaxm6cxpfy0bt/fulltext.pdf [extrait le 2012-01-24]
- Chentouf Z ET AL: "Experimenting with Feature Interaction Management in SIP Environment", TELECOMMUNICATION SYSTEMS., vol. 24, no. 2-4, 1 January 2003 (2003-01-01), pages 251-274, XP055017398, CH ISSN: 1018-4864, DOI: 10.1023/A:1026175115474

## Description

La présente invention concerne les communications de voix sur IP entre utilisateurs par l'intermédiaire d'un réseau IP (Internet Protocol).

Elle concerne notamment, bien que non exclusivement, les communications selon la technologie VoIP (Voice over IP).

Une communication vocale entre un premier utilisateur muni d'un premier dispositif de communication et un deuxième utilisateur muni d'un deuxième dispositif de communication par l'intermédiaire d'un réseau IP est susceptible de mettre en jeu plusieurs serveurs rendant un ou plusieurs services chacun. Par exemple, un serveur aval (côté premier utilisateur) et un serveur amont (côté deuxième utilisateur) peuvent être impliqués dans la communication, soit lors de son établissement, soit ultérieurement. Des serveurs intermédiaires peuvent en outre s'ajouter à ces deux serveurs.

Conventionnellement, les serveurs rendant des services distincts n'interagissent pas entre eux. Tout au plus, un serveur aval peut appeler un serveur amont pour déclencher la mise en oeuvre du service correspondant.

A titre d'illustration, on considère un réseau du type IMS (IP Multimedia Subsystem) comprenant un serveur mettant en oeuvre un service de messagerie vocale (voicemail). A l'occasion d'une communication de voix sur IP depuis un premier utilisateur vers un deuxième utilisateur, impliquant un premier serveur, en plus du serveur de messagerie vocale, la seule action que le premier serveur est capable d'avoir avec le serveur de messagerie vocale est de l'appeler, déclenchant ainsi l'annonce invitant le premier utilisateur à laisser un message au deuxième utilisateur.

Toutefois, il est possible que le service mis en oeuvre par le premier serveur de cet exemple perturbe le service de messagerie vocale du point de vue du premier utilisateur. Par exemple, pour mettre en oeuvre son service, le premier serveur peut interrompre la communication suffisamment longtemps pour que l'annonce soit déjà diffusée en grande partie par le serveur de messagerie vocale, lors de la mise en relation du premier utilisateur avec le serveur de messagerie vocale. Le premier utilisateur ne dispose alors que d'une annonce tronquée, voire d'aucune annonce du tout.

Dans le cas où le serveur aval ne serait pas un serveur de messagerie vocale, mais un autre type de serveur, la mise en oeuvre du service correspondant pourrait également être affectée, bien que de manière éventuellement différente, par le service mis en oeuvre par le premier serveur. De même, le service mis en oeuvre par le premier serveur pourrait lui-même être perturbé par la mise en oeuvre du service rendu par le serveur aval.

Des exemples et des mises en oeuvre possibles de l'art antérieur peuvent être trouvés dans les documents Chentouf Z ET AL: "Experimenting with Feature Interaction Management in SIP Environment"; SHEN Y: Private Extensions to the Session Initiation protocol (SIP) for Service Interaction Indicator, draft-shen-interaction-ind-08.txt*,* KOLBERG ET AL.: Managing feature interaction between distributed SIP call control services*,* et Zohair Chentouf : « New Management Methods For Feature and Preference interactions »*.*

La présente invention propose de limiter l'effet d'une telle perturbation de service du point de vue du premier utilisateur. L'invention est définie par les revendications indépendantes.

A cet effet, elle propose un procédé de communication de voix sur IP entre un premier utilisateur muni d'un premier dispositif de communication et un deuxième utilisateur muni d'un deuxième dispositif de communication par l'intermédiaire d'un réseau IP, la communication impliquant un premier serveur du réseau IP agencé pour rendre un premier service et un deuxième serveur du réseau IP agencé pour rendre un deuxième service, la mise en oeuvre d'un service parmi le premier service et le deuxième service ayant pour effet de perturber l'autre service du point de vue du premier utilisateur. Ce procédé comprend en outre la transmission d'un message du premier serveur au deuxième serveur pour limiter ledit effet de perturbation.

Le premier service et le deuxième service peuvent être mis en oeuvre lors de ladite communication

La transmission de ce message crée une interaction entre le premier serveur et le deuxième serveur, qui va au-delà du simple appel de fonction évoqué en introduction. Cette interaction s'apparente à un pilotage du deuxième serveur par le premier serveur, qui permet de limiter, en tout ou en partie, l'effet de perturbation. Le premier et le deuxième services peuvent ainsi être rendus de façon plus satisfaisante du premier utilisateur.

Selon des modes de réalisation avantageux qui peuvent être combinés avec l'aspect principal ci-dessus et/ou entre eux de toutes les manières possibles :
- le message est du type SIP INFO; et/ou
- le message inclut une commande dans la partie du message contenant les données utiles; et/ou
- la commande est précédée par une syntaxe spécifique connue du premier serveur et du deuxième serveur, tel que le mot COMMAND; et/ou

- la commande utilise une syntaxe libre connue du premier serveur et du deuxième serveur; et/ou
- le message inclut une commande comprenant une demande de réinitialisation d'une mise en oeuvre du deuxième service; et/ou
- le message inclut une commande comprenant une demande d'inhibition d'une fonction du deuxième service; et/ou
- le premier serveur est un serveur de filtrage d'appel anonyme; et/ou
- le premier serveur est un serveur d'interception légale d'appel; et/ou
- le deuxième serveur est un serveur de messagerie vocale; et/ou
- le deuxième serveur est un serveur de personnalisation d'une tonalité d'attente.

L'application propose aussi un système pour la mise en oeuvre d'un procédé de communication de voix sur IP entre un premier utilisateur muni d'un premier dispositif de communication et un deuxième utilisateur muni d'un deuxième dispositif de communication par l'intermédiaire d'un réseau IP tel que mentionné ci-dessus, dans lequel la communication implique un premier serveur du réseau IP agencé pour rendre un premier service et un deuxième serveur du réseau IP agencé pour rendre un deuxième service, la mise en oeuvre d'un service parmi le premier service et le deuxième service ayant pour effet de perturber l'autre service du point de vue du premier utilisateur. Le premier serveur est agencé pour transmettre un message au deuxième serveur pour limiter ledit effet de perturbation.

L'application propose également un serveur d'un réseau IP agencé pour rendre un premier service et apte à être impliqué dans une communication de voix sur IP entre un premier utilisateur muni d'un premier dispositif de communication et un deuxième utilisateur muni d'un deuxième dispositif de communication par l'intermédiaire du réseau IP, la mise en oeuvre du premier service ayant pour effet d'être perturbée par la mise en oeuvre d'un deuxième service rendu par un autre serveur du réseau IP impliqué dans ladite communication ou de perturber la mise en oeuvre dudit deuxième service. Ledit serveur comprend une unité de transmission d'un message à l'attention dudit autre serveur pour limiter ledit effet de perturbation.

L'application propose encore un serveur d'un réseau IP agencé pour rendre un service et apte à être impliqué dans une communication de voix sur IP entre un premier utilisateur muni d'un premier dispositif de communication et un deuxième utilisateur muni d'un deuxième dispositif de communication par l'intermédiaire du réseau IP, la mise en oeuvre du deuxième service ayant pour effet d'être perturbée par la mise en oeuvre d'un autre service rendu par un autre serveur du réseau IP impliqué dans ladite communication ou de perturber la mise en oeuvre dudit autre service. Ledit serveur comprend :
- une unité de réception d'un message provenant dudit autre serveur pour limiter ledit effet de perturbation ; et
- une unité d'adaptation pour adapter la mise en oeuvre dudit service en fonction dudit message.

D'autres particularités et avantages de la présente invention apparaîtront dans la description ci-après d'exemples de réalisation non limitatifs, en référence aux dessins annexés, dans lesquels :
- la figure 1 est un schéma illustrant un exemple de système apte à mettre en oeuvre l'invention ;
- la figure 2 est un exemple d'application selon un mode de réalisation de l'invention.

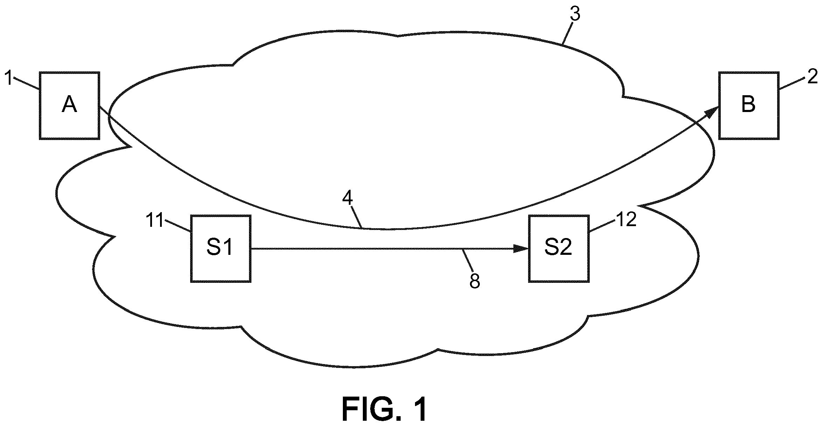

La figure 1 illustre schématiquement un exemple de système dans lequel la présente invention peut être mise en oeuvre.

Sur cette figure, on distingue un premier utilisateur A 1 et un deuxième utilisateur B 2. Ces deux utilisateurs sont munis chacun d' (au moins) un dispositif de communication respectif, de façon à être capables de tenir entre eux une communication de voix sur IP, par exemple selon la technologie VoIP.

Les dispositifs de communication des utilisateurs A et B peuvent être de tout type envisageable. Il peut par exemple s'agir de téléphones portables, de smartphones, de tablettes numériques, d'ordinateurs fixes, d'ordinateurs portables ou autres. Ils ne sont pas nécessairement de même type entre eux.

Les dispositifs de communication des utilisateurs A et B sont agencés pour pouvoir communiquer entre eux par l'intermédiaire d'un réseau IP 3. Ce dernier peut faire partie de tout type de réseau envisageable, tel qu'un réseau informatique, un réseau de télécommunications fixe, un réseau de télécommunications mobile ou autre. Avantageusement, le réseau IP 3 est un réseau du type IMS. Il supporte avantageusement le protocole ouvert de gestion de sessions SIP (Session Initiation Protocol) standardisé par l'IETF (Internet Engineering Task Force).

Lors de son établissement, ou bien ultérieurement, dans le cours de son exécution, une communication de voix sur IP 4 entre les utilisateurs A et B peut impliquer plusieurs serveurs du réseau IP 3. Dans l'exemple de la figure 1, deux serveurs sont impliqués, à savoir un serveur amont S1 11 et un serveur aval S2 12. D'autres serveurs intermédiaires pourraient éventuellement s'ajouter à S1 et S2. Ces deux serveurs S1 et S2 sont agencés pour rendre chacun un service respectif.

Les services en question sont tels que la mise en oeuvre de l'un d'entre eux a pour effet de perturber la mise en oeuvre de l'autre (et/ou inversement). C'est par exemple le cas, comme décrit en introduction, lorsque le service rendu par le serveur aval S2 12 est un service de messagerie vocale. Le service rendu par le serveur amont S1 11 est par exemple un service de filtrage d'appel anonyme (Stop Secret). Mais tout autre type de service peut être envisagé, comme cela apparaîtra à l'homme du métier. A titre d'exemple, le serveur amont S1 11 pourrait rendre un service d'interception légale d'appel, le serveur aval S2 12 pourrait rendre un service de personnalisation d'une tonalité d'attente, etc.

La perturbation du service rendu par l'un parmi le serveur amont S1 11 et le serveur aval S2 12 par l'autre de ces serveurs est limitée en partie ou en totalité grâce à la transmission d'un message 8 du serveur amont S1 11 au serveur aval S2 12 (et/ou d'un message du serveur aval S2 12 au serveur amont S1 11). Ce message 8 est transmis par une unité de transmission du serveur amont S1 11 (et/ou du serveur aval S2 12).

Ce message 8 comprend avantageusement une commande permettant au serveur amont S1 11 de piloter, au moins en partie, le serveur aval S2 12, c'est-à-dire d'intervenir sur la façon dont le service rendu par le serveur aval S2 12 est mis en oeuvre. La commande en question est choisie pour limiter l'effet de perturbation mentionné plus haut, comme cela sera mieux compris à la lumière des exemples détaillés plus loin.

Lorsque les serveurs S1 et S2 font partie d'un réseau 3 supportant le protocole SIP, le message 8 est avantageusement un message du type SIP INFO, tel que défini dans le standard RFC 2976 (Request for Comments: 2976) de l'IETF, "The SIP INFO Method", daté d'octobre 2010. L'avantage d'une telle solution est qu'elle utilise un message standard (mais avec un contenu libre), qui ne pose pas de problèmes d'interopérabilité et est susceptible de traverser sans encombre les équipements du réseau IP auxquels il n'est pas destiné, tels que des pare-feux, des serveurs intermédiaires ou autres.

La commande influençant la façon dont le service est rendu par le serveur aval S2 12 peut être incluse dans une partie du message 8 contenant les données utiles. Dans le cas d'un message 8 du type SIP INFO, cette commande est par exemple dans la partie utile (payload).

Afin d'en faciliter l'identification, la commande incluse dans le message 8 est éventuellement précédée par une syntaxe spécifique connue des serveurs S1 et S2. Cette syntaxe est par exemple le mot COMMAND, ou toute autre chaîne de caractères prédéfinie.

La commande en elle-même utilise avantageusement une syntaxe libre connue des serveurs S1 et S2. Cette syntaxe peut par exemple utiliser des verbes ou des noms d'action simples, par exemple "restart" pour une demande de réinitialisation du service rendu par le serveur aval S2 12, "no_functionname" pour une demande d'inhibition d'une fonction donnée du service rendu par le serveur aval S2 12, ou autre. Une syntaxe plus complexe peut également être envisagée, en remplacement ou en complément de cette syntaxe simple, comme par exemple des commandes complexes utilisant le langage XML (Extensible Markup Language) ou autre.

A la réception du message 8 provenant du serveur amont S1 11 par une unité de réception appropriée, le serveur aval S2 12 est alors capable d'identifier la présence d'une commande à son attention et d'interpréter correctement cette commande de façon à l'appliquer. Autrement dit, le serveur aval S2 12 comprend une unité d'adaptation pour adapter la mise en oeuvre de son service en fonction du message 8. Les autres équipements du réseau 3 par lesquels le message 8 transite peuvent simplement le faire suivre, en ignorant la commande.

A titre d'exemple purement illustratif, un message 8 tel que décrit ci-dessus peut prendre la forme suivante :
*INFO sip:7007471000@example.com SIP*/*2.0*
*Via: SIP*/*2.0*/*UDP alice.uk.example.com:5060*
*From: <sip:7007471234@alice.uk.example.com>;tag=d3f423d*
*To: <sip:7007471000@example.com>;tag=8942*
*Call-ID: 312352@myphone*
*CSeq: 5 INFO*
*Content-Length:16*
*Content-Type: application*/*text*
*COMMAND:*
*restart*

On peut observer, dans cet exemple, la présence d'une commande "restart" introduite par le terme "COMMAND" à la fin de la partie utile de ce message SIP INFO.

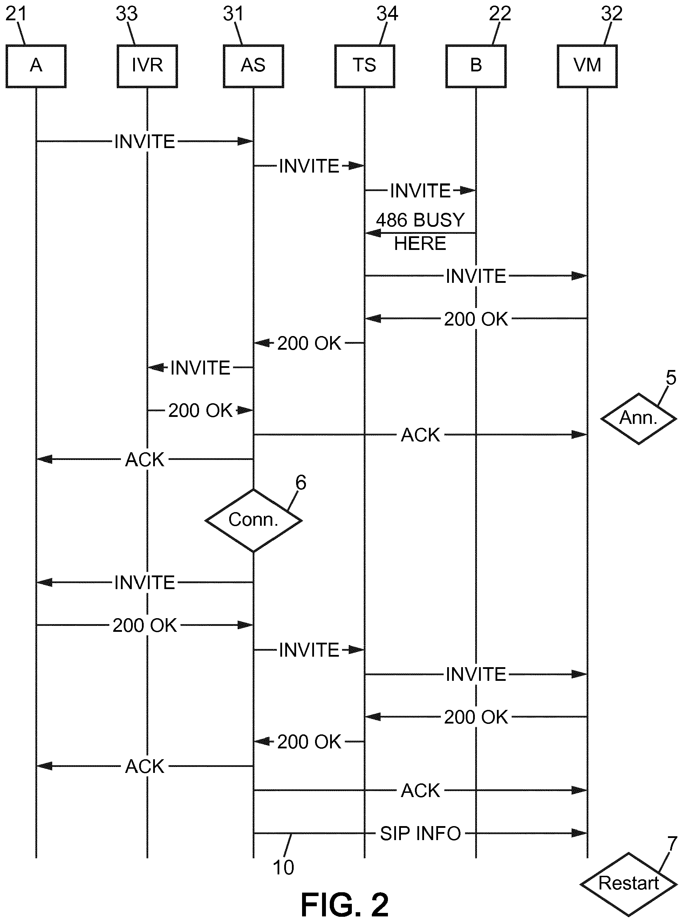

Un premier exemple d'application de l'invention va maintenant être décrit en référence à la figure 2.

Dans cet exemple, on retrouve des utilisateurs A 21 et B 22 correspondant respectivement aux utilisateurs A 1 et B 2 de la figure 1, ainsi que des premier et deuxième serveurs AS 31 et VM 32 correspondant respectivement aux serveurs S1 11 et S2 12 de la figure 1. Le premier serveur AS 31 est ici un serveur de filtrage d'appel anonyme, c'est-à-dire qu'il empêche un utilisateur initiant une communication de voix sur IP de le faire de façon anonyme (i.e. en masquant son numéro d'appel). Le deuxième serveur VM 32 est ici un serveur de messagerie vocale, c'est-à-dire qu'il invite un utilisateur appelant à enregistrer un message vocal à l'attention d'un utilisateur appelé dans le cadre de l'établissement d'une communication de voix sur IP.

Des serveurs intermédiaires sont en outre impliqués dans l'exemple de la figure 2, à savoir un serveur vocal interactif IVR 33 pour interagir avec un utilisateur initiant une communication de voix sur IP, sous le contrôle du serveur AS 31, et un serveur de téléphonie TS 34 pour permettre une communication de voix sur IP entre deux utilisateurs, sous le contrôle du serveur AS 31.

Classiquement, lorsque l'utilisateur A 21 initie une communication de voix sur IP à l'attention de l'utilisateur B 22, le serveur AS 31 se met en coupure de l'appel et requiert du serveur IVR 33 qu'il demande à l'utilisateur A 21 d'enregistrer son nom. Le serveur AS 31 se charge ensuite de contacter l'utilisateur B 22, par l'intermédiaire du serveur TS 34, et de lui présenter l'identité déclinée par l'utilisateur A 21. Le serveur AS 31 demande ensuite à l'utilisateur B 22 s'il accepte ou non l'appel de l'utilisateur A 21.

Si l'utilisateur B 22 renvoie l'appel sur sa messagerie (Call Forward), qui est gérée par le serveur VM 32, le serveur AS 31 est alors connecté au serveur VM 32. Dès lors, l'annonce d'invitation à laisser un message commence à être diffusée (étape 5), avant même que l'utilisateur A 21 ait été connecté au serveur VM 32.

Avant que le serveur AS 31 reconnecte l'utilisateur A 21 au serveur VM 32 (étape 6), il s'est écoulé un certain temps pendant lequel l'annonce a été diffusée au moins en partie. De ce fait, l'annonce entendue par l'utilisateur A 21 est tronquée, voire inexistante si elle a déjà été entièrement diffusée préalablement à la connexion de l'utilisateur A 21 avec le serveur VM 32. Autrement dit, la mise en oeuvre du filtrage d'appel anonyme par le serveur AS 31, qui s'est mis en coupure de l'appel, a perturbé la mise en oeuvre du service de messagerie rendu par le serveur VM 32 du point de vue de l'utilisateur A 21.

Les messages (INVITE et 200 OK) montrés sur la figure 2 relativement aux étapes ci-dessus sont classiques.

Pour limiter l'effet de la perturbation précitée, une unité de transmission du serveur AS 31 transmet un message 10, par exemple du type SIP INFO, au serveur VM 32. Ce message 10 correspond au message 8 décrit plus haut en référence à la figure 8. Il inclut une commande de réinitialisation de la mise en oeuvre du service de messagerie vocale (étape 7 "restart"). A la réception de ce message 10 par une unité de réception du serveur VM 32, ce dernier reconnaît la commande et l'applique en rejouant depuis le début l'annonce d'invitation à laisser un message vocal. Il s'agit là d'une adaptation du service de messagerie tenant compte du message 10. Cette adaptation peut être réalisée par une unité d'adaptation appropriée du serveur VM 32.

L'utilisateur A 21 bénéficie alors de l'annonce dans son intégralité. De son point du vue, le service de messagerie est rendu sans perturbation, ou du moins avec une perturbation moindre.

Pour réduire encore la perturbation du point de vue de l'utilisateur A 21, on peut prévoir que le serveur AS 31 envoie d'abord au serveur VM 32 un message incluant une demande d'inhibition d'une fonction du service de messagerie, par exemple du déclenchement de l'annonce par le serveur VM 32. On évite ainsi que l'utilisateur A 21 puisse entendre, lors de sa connexion avec le serveur VM 32, la fin de cette annonce, avant d'entendre cette annonce dans son intégralité. Ce message peut être transmis par exemple entre les étapes 5 et 6 et peut prendre la même forme que le message 10, mais avec une commande d'inhibition plutôt que de réinitialisation.

Dans un deuxième exemple d'application de l'invention, on suppose que le premier serveur correspondant au serveur S1 11 de la figure 1 est un serveur d'interception légale d'appel. Le deuxième serveur correspondant au serveur S2 12 de la figure 1 reste, quant à lui, un serveur de messagerie vocale.

Dans ce scénario, lorsqu'un utilisateur A initie une communication de voix sur IP à l'attention d'un utilisateur B, le serveur d'interception légale d'appel se met en coupure de l'appel et active un serveur d'enregistrement de communication vocale. Lorsque l'appel est redirigé vers le serveur de messagerie vocale, côté utilisateur B, les opérations menées dans le cadre du service d'interception légale d'appel peuvent prendre un certain temps, susceptible de faire rater le début au moins de l'annonce à l'utilisateur A. Cet effet de perturbation du service de messagerie vocale pourrait permettre à l'utilisateur A de comprendre que son appel fait l'objet d'une interception légale, ce qui n'est bien sûr pas souhaitable.

Pour limiter cette perturbation, en tout ou en partie, une unité de transmission du serveur d'interception légale d'appel peut transmettre au service de messagerie vocale un message du type du message 10 décrit plus haut, incluant une commande comprenant une demande de réinitialisation de la mise en oeuvre du service de messagerie vocale. A la réception de ce message par une unité de réception du serveur de messagerie vocale, ce dernier reconnaît la commande et l'applique en rejouant depuis le début l'annonce invitant à laisser un message vocal. En complément ou en remplacement, un message incluant une demande d'inhibition d'une fonction du service de messagerie, par exemple une inhibition du déclenchement de l'annonce par le serveur de messagerie vocale, pourrait être transmis depuis le serveur d'interception légale d'appel au serveur de messagerie vocale.

Selon un troisième exemple d'application de la présente invention, on considère comme premier et deuxième serveurs correspondant respectivement aux serveurs S1 11 et S2 12 de la figure 1, un serveur quelconque, par exemple un serveur de filtrage d'appel anonyme, et un serveur de personnalisation d'une tonalité d'attente (ring back tone). Ce dernier a pour but, lors d'un appel d'un utilisateur A à l'attention d'un utilisateur B, de faire entendre à l'utilisateur A une tonalité d'attente personnalisée (c'est-à-dire dépendante de l'utilisateur A et/ou de l'utilisateur B), plutôt qu'une tonalité d'attente standard, comme cela est connu en soi.

Lors de l'établissement d'une communication de voix sur IP de l'utilisateur A vers l'utilisateur B, deux services sont ainsi déclenchés en coupure de l'appel, à savoir un service vocal quelconque, par exemple de filtrage d'appel anonyme, rendu par le premier serveur, et un service de personnalisation d'une tonalité d'attente rendu par le deuxième serveur.

Dans le cadre de sa mise en oeuvre, le service de personnalisation d'une tonalité d'attente envoie un flux audio avant établissement de l'appel (early media) vers l'utilisateur A. Ce flux est intercepté par le premier serveur quelconque, qui est interposé entre le deuxième serveur et l'utilisateur A.

Or le service rendu par le premier serveur quelconque, qui est un service vocal, serait perturbé par la réception d'un tel flux audio.

Pour éviter une telle perturbation, le premier serveur quelconque envoie en amont, au serveur de personnalisation d'une tonalité d'attente, un message incluant une commande comprenant une demande d'inhibition d'une fonction du service de personnalisation d'une tonalité d'attente, à savoir l'inhibition de l'envoi du flux audio. Ce message est par exemple de type SIP INFO avec une partie utile incluant une commande du type "COMMAND: No_early_media".

A réception de ce message, le serveur de personnalisation d'une tonalité d'attente comprend qu'il ne doit pas envoyer de flux audio en retour à l'utilisateur A et adapte donc son service en s'abstenant d'un tel envoi. Le service rendu par le premier serveur est ainsi préservé de la perturbation audio qui en serait résulté autrement.

Bien d'autres exemples d'application peuvent être envisagés dans le cadre de la présente invention, comme cela apparaîtra à l'homme du métier. Ces exemples d'application peuvent mettre en jeu des premier et deuxième serveurs très variés. De plus, la perturbation limitée ou évitée grâce au message transmis entre ces serveurs peut être de toute nature envisageable. Elle peut notamment intervenir lors de l'établissement d'une communication de voix sur IP entre les utilisateurs A et B, ou bien ultérieurement, au cours de cette communication, voire à la clôture de cette communication.

Tout ou partie des opérations décrites ci-dessus peuvent être mises en oeuvre à l'aide d'un produit programme informatique comprenant des instructions de code appropriées pour mettre en oeuvre le procédé selon l'invention, lorsqu'il est chargé et exécuté sur des moyens informatiques, par exemple du premier serveur et/ou du deuxième serveur et/ou autre.

## Revendications

1. Procédé de communication de voix sur IP entre un premier utilisateur (1 ;21) muni d'un premier dispositif de communication et un deuxième utilisateur (2;22) muni d'un deuxième dispositif de communication par l'intermédiaire d'un réseau IP (3), la communication impliquant un premier serveur (11;31) du réseau IP agencé pour rendre un premier service et un deuxième serveur (12;32) du réseau IP agencé pour rendre un deuxième service, le premier serveur étant un serveur de filtrage d'appel anonyme ou un serveur d'interception légale d'appel, la mise en oeuvre d'un service parmi le premier service et le deuxième service ayant pour effet de perturber l'autre service du point de vue du premier utilisateur, le procédé comprenant, lors de ladite communication:
- une mise en oeuvre du premier service ;
- une réinitialisation de la mise en oeuvre du deuxième service pour limiter l'effet de perturbation, la mise en oeuvre du deuxième service étant réinitialisée suite à la transmission d'un message (8;10) du premier serveur au deuxième serveur , ledit message incluant une commande comprenant une demande de réinitialisation d'une mise en oeuvre du deuxième service.

2. Procédé selon la revendication 1, dans lequel le message (8;10) est du type SIP INFO.

3. Procédé selon la revendication 2, dans lequel le message (8;10) inclut une commande dans la partie du message contenant les données utiles.

4. Procédé selon la revendication 3, dans lequel la commande est précédée par une syntaxe spécifique connue du premier serveur (11;31) et du deuxième serveur (12;32), tel que le mot COMMAND.

5. Procédé selon la revendication 3, dans lequel la commande utilise une syntaxe libre connue du premier serveur (11;31) et du deuxième serveur (12;32).

6. Procédé selon la revendication 1, dans lequel le message (8;10) inclut une commande comprenant une demande d'inhibition d'une fonction du deuxième service.

7. Procédé selon la revendication 1, dans lequel le deuxième serveur (12;32) est un serveur de messagerie vocale.

8. Procédé selon la revendication 1, dans lequel le deuxième serveur (12;32) est un serveur de personnalisation d'une tonalité d'attente.

9. Système pour la mise en oeuvre d'un procédé de communication de voix sur IP entre un premier utilisateur (1;21) muni d'un premier dispositif de communication et un deuxième utilisateur (2;22) muni d'un deuxième dispositif de communication par l'intermédiaire d'un réseau IP (3), ledit système comprenant un premier serveur (11; 31) et un deuxième serveur (12 ;32), ledit premier serveur étant un serveur de filtrage d'appel anonyme ou un serveur d'interception légale d'appel, ledit système dans lequel la communication implique le premier serveur (11;31) du réseau IP agencé pour rendre un premier service et le deuxième serveur (12;32) du réseau IP agencé pour rendre un deuxième service, le premier service et le deuxième service étant tels que la mise en oeuvre d'un service parmi le premier service et le deuxième service a pour effet de perturber l'autre service du point de vue du premier utilisateur, le premier serveur étant agencé pour transmettre un message (8;10) au deuxième serveur pour limiter ledit effet de perturbation, ledit message inclut une commande comprenant une demande de réinitialisation d'une mise en oeuvre du deuxième service, le premier service et le deuxième service étant tels que leur mise en oeuvre est réalisée lors de ladite communication.

## Patentansprüche

1. IP-Voicemail-Kommunikationsverfahren zwischen einem ersten Benutzer (1; 21), der mit einer ersten Kommunikationsvorrichtung ausgestattet ist, und einem zweiten Benutzer (2; 22), der mit einer zweiten Kommunikationsvorrichtung ausgestattet ist, über ein IP-Netz (3), wobei die Kommunikation einen ersten Server (11; 31) des IP-Netzes, der angeordnet ist, um einen ersten Dienst zu erbringen, und einen zweiten Server (12; 32) des IP-Netzes, der angeordnet ist, um einen zweiten Dienst zu erbringen, impliziert, wobei der erste Server ein Server zum Abfangen eines anonymen Anrufs oder ein Server zur gesetzlichen Überwachung eines Anrufs ist, wobei die Durchführung eines Dienstes von dem ersten Dienst und dem zweiten Dienst den Effekt hat, den anderen Dienst vom Standpunkt des ersten Benutzers zu stören, wobei das Verfahren während der Kommunikation umfasst:
- eine Durchführung des ersten Dienstes;
- eine Reinitialisierung der Durchführung des zweiten Dienstes, um den Effekt der Störung zu begrenzen, wobei die Durchführung des zweiten Dienstes nach der Übertragung einer Nachricht (8; 10) des ersten Servers an den zweiten Server reinitialisiert wird, wobei die Nachricht einen Befehl aufweist, der eine Anforderung zur Reinitialisierung einer Durchführung des zweiten Dienstes umfasst.

2. Verfahren nach Anspruch 1, wobei die Nachricht (8; 10) vom Typ SIP INFO ist.

3. Verfahren nach Anspruch 2, wobei die Nachricht (8; 10) einen Befehl in dem Teil der Nachricht aufweist, der die Nutzdaten enthält.

4. Verfahren nach Anspruch 3, wobei dem Befehl eine bekannte spezifische Syntax des ersten Servers (11; 31) und des zweiten Servers (12; 32) vorausgeht, wie das Wort COMMAND.

5. Verfahren nach Anspruch 3, wobei der Befehl eine bekannte freie Syntax des ersten Servers (11; 31) und des zweiten Servers (12; 32) verwendet.

6. Verfahren nach Anspruch 1, wobei die Nachricht (8; 10) einen Befehl aufweist, der eine Anforderung zur Inhibierung einer Funktion des zweiten Dienstes umfasst.

7. Verfahren nach Anspruch 1, wobei der zweite Server (12; 32) ein Voicemail-Server ist.

8. Verfahren nach Anspruch 1, wobei der zweite Server (12; 32) ein Server zur Personalisierung eines Wartetons ist.

9. System zur Durchführung eines IP-Voicemail-Kommunikationsverfahrens zwischen einem ersten Benutzer (1; 21), der mit einer ersten Kommunikationsvorrichtung ausgestattet ist, und einem zweiten Benutzer (2; 22), der mit einer zweiten Kommunikationsvorrichtung ausgestattet ist, über ein IP-Netz (3), wobei das System einen ersten Server (11; 31) und einen zweiten Server (12; 32) umfasst, wobei der erste Server ein Server zum Abfangen eines anonymen Anrufs oder ein Server zur gesetzlichen Überwachung eines Anrufs ist, wobei in dem System die Kommunikation den ersten Server (11; 31) des IP-Netzes, der angeordnet ist, um einen ersten Dienst zu erbringen, und den zweiten Server (12; 32) des IP-Netzes, der angeordnet ist, um einen zweiten Dienst zu erbringen, impliziert, wobei der erste Dienst und der zweite Dienst derart sind, dass die Durchführung eines Dienstes von dem ersten Dienst und dem zweiten Dienst den Effekt hat, den anderen Dienst vom Standpunkt des ersten Benutzers zu stören, wobei der erste Server angeordnet ist, um eine Nachricht (8; 10) an den zweiten Server zu übertragen, um den Effekt der Störung zu begrenzen, wobei die Nachricht einen Befehl aufweist, der eine Anforderung zur Reinitialisierung einer Durchführung des zweiten Dienstes umfasst, wobei der erste Dienst und der zweite Dienst derart sind, dass ihre Durchführung während der Kommunikation vorgenommen wird.

## Claims

1. Method for voice over IP communication between a first user (1; 21) equipped with a first communication device and a second user (2; 22) equipped with a second communication device by way of an IP network (3), the communication involving a first server (11; 31) of the IP network designed to provide a first service and a second server (12; 32) of the IP network designed to provide a second service, the first server being an anonymous call filter server or a legal call interception server, the implementation of a service from among the first service and the second service having the effect of disrupting the other service from the point of view of the first user, the method comprising, during said communication:
- implementing the first service;
- reinitializing the implementation of the second service so as to limit the effect of the disruption, the implementation of the second service being reinitialized following the transmission of a message (8; 10) from the first server to the second server, said message including a command comprising a request to reinitialize implementation of the second service.

2. Method according to Claim 1, wherein the message (8; 10) is of SIP INFO type.

3. Method according to Claim 2, wherein the message (8; 10) includes a command in the portion of the message containing the payload data.

4. Method according to Claim 3, wherein the command is preceded by specific syntax known to the first server (11; 31) and to the second server (12; 32), such as the word COMMAND.

5. Method according to Claim 3, wherein the command uses free syntax known to the first server (11; 31) and to the second server (12; 32).

6. Method according to Claim 1, wherein the message (8; 10) includes a command comprising a request to inhibit a function of the second service.

7. Method according to Claim 1, wherein the second server (12; 32) is a voicemail server.

8. Method according to Claim 1, wherein the second server (12; 32) is a server for customizing a holding tone.

9. System for implementing a method for voice over IP communication between a first user (1; 21) equipped with a first communication device and a second user (2; 22) equipped with a second communication device by way of an IP network (3), said system comprising a first server (11; 31) and a second server (12; 32), said first server being an anonymous call filter server or a legal call interception server, said system in which the communication involves the first server (11; 31) of the IP network designed to provide a first service and the second server (12; 32) of the IP network designed to provide a second service, the first service and the second service being such that the implementation of a service from among the first service and the second service has the effect of disrupting the other service from the point of view of the first user, the first server being designed to transmit a message (8; 10) to the second server in order to limit said disruption effect, said message includes a command comprising a request to reinitialize implementation of the second service, the first service and the second service being such that they are implemented during said communication.
